# EUROPÄISCHE PATENTSCHRIFT

(11) **EP 2 429 682 B1**
(45) Veröffentlichungstag und Bekanntmachung des Hinweises auf die Patenterteilung: **08.10.2014**
(21) Anmeldenummer: 10718989.6
(22) Anmeldetag: 11.05.2010
(51) Int. Cl.: B01D 46/52, B01D 46/00

(54) **VERFAHREN ZUR HERSTELLUNG EINES INSBESONDERE RECHTECKIGEN FLACHFILTERELEMENTS FÜR FLUIDE, FILTERELEMENT UND FILTERVORRICHTUNG MIT EINEM FILTERELEMENT**
METHOD FOR PRODUCING AN IN PARTICULAR RECTANGULAR FLAT FILTER ELEMENT FOR FLUIDS, FILTER ELEMENT, AND FILTER DEVICE HAVING A FILTER ELEMENT
PROCÉDÉ DE FABRICATION D'UN ÉLÉMENT FILTRANT PLAT, EN PARTICULIER RECTANGULAIRE, POUR DES FLUIDES, ÉLÉMENT FILTRANT ET DISPOSITIF FILTRANT POURVU D'UN ÉLÉMENT FILTRANT

(30) Priorität: 14.05.2009 DE 102009021248
(43) Veröffentlichungstag der Anmeldung: 21.03.2012
(73) Patentinhaber: MANN+HUMMEL GmbH, 71638 Ludwigsburg (DE)
(72) Erfinder: REINHOLD, Thomas, E-50011 Zaragoza (ES)
(86) Internationale Anmeldenummer: PCT/EP2010/056392
(87) Internationale Veröffentlichungsnummer: WO 2010/130698

(56) Entgegenhaltungen:
- EP-A2- 0 170 643
- WO-A1-01/02080
- WO-A2-2007/149899
- DE-C1- 3 925 511
- DE-U1- 20 010 383
- GB-A- 2 411 367
- US-A- 4 056 376
- US-A- 4 570 844
- US-A1- 2002 100 264
- US-A1- 2004 065 066
- US-A1- 2004 182 055

## Beschreibung

### Technisches Gebiet

Die Erfindung betrifft ein Verfahren zur Herstellung eines insbesondere rechteckigen Flachfilterelements für Fluide, insbesondere eines Kraftfahrzeugs, bei dem ein Filtermedium zu einem Filterbalg gefaltet wird.

Ferner betrifft die Erfindung ein Flachfilterelement, insbesondere ein rechteckiges Flachfilterelement, für Fluide, insbesondere eines Kraftfahrzeugs, mit einem Filterbalg aus gefaltetem Filtermedium.

Außerdem betrifft die Erfindung eine Filtervorrichtung für Fluide insbesondere eines Kraftfahrzeugs mit einem Filtergehäuse zur Aufnahme eines Flachfilterelements.

### Stand der Technik

Die Stirnfalten im Sinne der Erfindung sind die beiden äußeren Falten, an gegenüberliegenden Stirnseiten des Filterbalgs. Die Stirnränder sind die beiden freien Ränder des Filtermediums, welche entlang der Stirnfalten verlaufen und diese an den Stirnseiten des Filterbalgs begrenzen. Die Stirnkanten des Filterbalgs sind die beiden anderen freien Ränder des Filterbalges, die sich zwischen den Stirnrändern erstrecken und entsprechend der Faltung des Filterbalgs verlaufen. Die Faltkanten sind die Kanten, entlang denen das Filtermedium gefaltet ist. Bei einem zickzackförmig gefalteten, quaderförmigen Filterbalg sind die Stirnränder und die Faltkanten in der Regel die gerade und verlaufen parallel zueinander. Die Stirnkanten verlaufen zickzackförmig und senkrecht zu den Stirnrändern und den Faltkanten.

Bei Flachfilterelementen sind die Filtermedien nicht geschlossen, das heißt, die Stirnfalten sind ebenso wie die Stirnkanten nicht miteinander verbunden. Im Unterschied dazu sind bei Rundfilterelemente die Filtermedien geschlossen, das heißt ihre Stirnfalten sind miteinander verbunden. Flachfilterelemente können dabei eben sein, aber auch Biegungen in unterschiedliche Richtungen aufweisen.

Bei marktbekannten rechteckigen Flachfilterelementen für Fluide werden benachbarte Falten eines gefalteten Filterbalgs im Bereich der Stirnkanten mittels Schmelzkleber fluiddicht verbunden. Der Filterbalg wird nach dem Falten und Kleben auf eine vorgebbare Länge geschnitten. Die Flachfilterelemente werden ferner mit einer Polyurethan(PUR)-Dichtung ausgestattet zur fluiddichten Trennung der Rohfluidseite von der Reinfluidseite.

Um den Anforderungen bezüglich der Signalqualität eines hinter einem Filterelement angeordneten Luftmassenmessers, insbesondere hinsichtlich des Signalrauschens und des Kennlinienverlaufs gerecht zu werden, ist es erforderlich, Flachluftfilterelemente mit möglichst gleichmäßig reproduzierbaren Merkmalen wie Maßhaltigkeit, Faltenverlauf, Faltenstabilität und effektiver Filterfläche zu produzieren. Außerdem ist es insbesondere aus Platzgründen und ökonomischen Gründen wünschenswert, eine optimale, vorzugsweise möglichst große effektive Filterfläche bei möglichst geringen Außenmaßen zu realisieren.

DE 200 10383 U1 offenbart Filterelement mit einem festen Rahmen, in den ein zickzackförmiger Faltenbalg eingebracht ist und an der ganzen Peripherie des Filters vollständig mit einem Klebemittel mit dem Rahmen verbunden ist. Ein ähnliches Filterelement ist aus der WO 01/02080 A1 bekannt. Des Weiteren wird hinsichtlich Filterelementen mit einem Rahmen auf die Dokumente US 2002/100264 A1, US 2004/065066 A1, US 4 056 376 A, DE 39 25 511 C1, GB 2 411 367 A, EP 0 170 643 A2 und WO 2007/149899 A2, US 2004/182055 A1, US 4 570 844 A verwiesen.

Der Erfindung liegt die Aufgabe zugrunde, ein Verfahren zur Herstellung von Flachfilterelementen, Flachfilterelemente und eine Filtervorrichtung der eingangs genannten Art zu gestalten, bei dem (denen) eine optimale effektive Filterfläche möglichst reproduzierbar realisiert und die Verbindung zwischen dem Filtermedium und dem Rahmen verbessert wird.

### Offenbarung der Erfindung

Diese Aufgabe wird erfindungsgemäß dadurch gelöst, dass der Filterbalg in Bereichen seiner Stirnfalten mit einem festen Filterelementrahmen fluiddicht verbunden wird und die Stirnkanten des Filterbalgs mit dem Fillerelementrahmen fluiddicht verbunden werden, derart, dass der Filterbalg in dem Filterelementrahmen gehalten wird.

Erfindungsgemäß wird das Filtermedium zu dem Filterbalg gefaltet und geschnitten, bevor es mit dem Filterelementrahmen verbunden wird. Dies kann beispielsweise in einem kontinuierlichen Verfahren mit einem mitlaufenden Messer erfolgen. So ist es möglich, die Faltenanzahl und damit die Filterfläche exakt vorzugeben. Dann wird der Filterbalg rundherum fluiddicht mit dem Filterelementrahmen verbunden. Dabei kann der Filterbalg am oder im Filterelementrahmen auch mit einer Krümmung versehen werden. Es kann auch ein entsprechend geformter Filterelementrahmen verwendet werden. Der Filterbalg ist im fertigen Flachfilterelement mit dem Filterelementrahmen stabil verbunden, so dass Verformungen des Filterbalges insbesondere aufgrund von mechanischen, feuchtigkeits- oder temperaturbedingten Einflüssen minimiert werden. Die zur Verbindung mit dem Filterelementrahmen benötigte Fläche des Filtermediums kann auf ein Minimum beschränkt werden, so dass das Verhältnis der effektiven Filterfläche zur eingesetzten Medienfläche optimiert werden kann. So ist es möglich, die Stirnkanten und die Bereiche der Stirnfalten reproduzierbar vorzugsweise nur in einem im Verhältnis zur gesamten Filterfläche schmalen Bereich mit dem Filterelementrahmen zu verbinden. Es ist nicht erforderlich Sicherheitsabstände zu den Rändern oder Kanten einzuhalten. Das Flachfilterelement kann dann einfach in ein entsprechendes Filtergehäuse montiert werden, derart, dass eine Reinfluidseite des Flachfilterelements fluiddicht von einer Rohfluidseite getrennt ist. Der Filterelementrahmen kann außerdem mit einer separaten Dichteinrichtung gegenüber dem Filtergehäuse abgedichtet werden, welche als Lebensdauerbauteil ausgestaltet werden kann. Die Dichteinrichtung ist getrennt von dem Filterbalg, so dass im zur Verfügung stehenden Baurraum eine möglichst große Filterfläche integriert werden kann. Dies erhöht außerdem die Reproduzierbarkeit der effektiven Filterfläche. Die Dichtung kann dabei am Filterelementrahmen oder an einem Teil des Filtergehäuses angebracht sein.

Bei einer vorteilhaften Ausgestaltung des Verfahrens kann das Filtermedium zickzackförmig gefaltet werden. So kann ein optimales Verhältnis von maximaler effektiver Filterfläche zu minimalem Bauraum realisiert werden.

Bei einer weiteren vorteilhaften Ausgestaltung des Verfahrens kann das Filtermedium so gefaltet werden, dass sich die Stirnränder der Stirnfalten auf der gleichen Seite des Filterbalgs befinden. Auf diese Weise können beide Stirnränder platzsparend vorzugsweise in einer Ebene mit dem Filterelementrahmen verbunden werden. Sie können so die äußerste Begrenzung des Filterbalgs an den Stirnseiten bilden, wodurch die effektive Filterfläche vergrößert wird.

Vorteilhafterweise kann wenigstens einer der Stirnränder und/oder wenigstens eine Faltkante im Bereich einer der Stirnfalten mit dem Filterelementrahmen fluiddicht verbunden werden. Die Verbindung der Stirnränder und der Faltkanten mit dem Filterelementrahmen erfolgt idealerweise jeweils nur entlang einer Linie, so dass der Verlust an aktiver Filterfläche minimiert wird. Im Unterschied dazu beansprucht die flächige Verbindung mittels einer Stirnfalte mehr Fläche des Filterbalgs bzw. -mediums.

Erfindungsgemäß wird der Filterbalg in den Bereichen seiner Stirnfalten mit einem Basisrahmenteil des Filterelementrahmens fluiddicht verbunden und werden die Stirnkanten des Filterbalgs jeweils mit einem Kanten-Seitenrahmenteil des Filterelementrahmens fluiddicht verbunden. Die Kanten-Seitenrahmenteile können vorzugsweise geschlossene Flächen zur Befestigung des Filterbalgs aufweisen, um eine lückenlose Verbindung mit den Stirnfalten zu ermöglichen. Dies verbessert die Stabilität des Flachfilterelements und wirkt einer Verformung des Filterbalgs insbesondere in Sichelform entgegen, die durch Temperatur- und/oder Feuchtigkeitseinflüsse verursacht werden können.

Vorteilhafterweise können die Kanten-Seitenrahmenteile und das Basisrahmenteil fluiddicht miteinander verbunden werden, was die Trennung der Reinfluidseite des Flachfilterelements von der Rohfluidseite erleichtert.

Ferner wird zwischen den Kanten-Seitenrahmenteilen jeweils ein Falten-Seitenrahmenteil angeordnet und fluiddicht mit dem Basisrahmenteil und den Kanten-Seitenrahmenteilen verbunden. Auf diese Weise kann der Filterelementrahmen rund herum geschlossen werden, was sich positiv auf die Stabilität auswirkt. Außerdem kann so einfach eine effiziente Abdichtung des Filterelements im Filtergehäuse realisiert werden.

Um die Dichtheit des Filterelementrahmens zu erhöhen und die Trennung der Reinfluidseite von der Rohfluidseite weiter zu verbessern, können vorteilhafterweise die Kanten-Seitenrahmenteile und die Falten-Seitenrahmenteile fluiddicht miteinander verklebt oder verschweißt werden.

Um die Verbindung zwischen dem Filtermedium und dem Basisrahmenteil zu verbessern, insbesondere die Fluiddichtheit zu optimieren, werden die Stirnfalten mit Führungsmitteln der Falten-Seitenrahmenteile gegen das Basisrahmenteil gedrückt. Die Führungsabschnitte können insbesondere als keilartige Aufsätze auf den dem Filterbalg zugewandten Flächen der Falten-Seitenrahmentelle verwirklicht werden.

Bei einer weiteren vorteilhaften Ausgestaltung des Verfahrens können die zunächst separaten Kanten-Seitenrahmenteile mit dem separaten Basisrahmenteil und gegebenenfalls mit den separaten Falten-Seitenrahmenteilen fluiddicht verbunden werden. Separate Rahmenteile können einfach getrennt voneinander hergestellt werden. Sie haben außerdem den Vorteil, dass sie gleichzeitig und somit zeitsparend aus unterschiedlichen Richtungen an den Filterbalg gedrückt und mit diesem verbunden werden können.

Bei einer alternativen vorteilhaften Ausgestaltung des Verfahrens können die Kanten-Seitenrahmenteile, das Basisrahmenteil und gegebenenfalls die Falten-Seitenrahmenteile einstückig vorzugsweise mittels Biegeverbindungen, insbesondere Filmscharnieren, mit einander verbunden und zu dem Filterelementrahmen gestaltet werden. Der Filterelementrahmen kann so in einem Stück vorgefertigt, insbesondere flach geformt, und falls nötig geschnitten oder in anderer Weise bearbeitet werden. Die Kanten-Seitenrahmenteile und gegebenenfalls die Falten-Seitenrahmenteile können mittels der Biegeverbindungen relativ zu dem Basisrahmenteil geklappt werden, um den Filterelementrahmen in die gewünschte Form zu bringen. Dabei wird der Filterbalg in den Filterelementrahmen eingebunden. Die Filmscharniere können an den Faltstellen geprägt oder eingekerbt werden.

Vorteilhafterweise kann der Filterbalg mittels Kleben, insbesondere mittels eines wenig fließfähigen Klebstoffs oder einer Klebefolie, die aktiviert, insbesondere erwärmt, werden kann und dadurch formbar werden kann, oder Schweißen, insbesondere Heißgas-, Spiegel- oder Infrarot (IR)-Schweißen, mit dem Filterelementrahmen verbunden werden. Die oben aufgezählten Methoden ermöglichen eine präzise, reproduzierbare Verbindung des Filterbalgs mit dem Filterelementrahmen, bei dem die zur Verbindung benötigte Filterfläche minimiert und dadurch die effektive Filterfläche maximiert wird. Wenig fließfähiger Klebstoff bleibt während der Aushärtezeit an der Verbindungsstelle. Er dringt auch nur in geringem, definierbarem Maße in den Filterbalg ein. Zähflüssiger Klebstoff kann einfach auch vor dem Zusammenbau auf dem Filterelementrahmen aufgebracht werden. Er bleibt nach dem Auftrag im Wesentlichen formstabil. Der Filterbalg wird in die Klebstoffmasse eingedrückt und von dieser während und nach dem Aushärten fixiert. Die spezielle Klebefolie kann an dem Filterelementrahmen vormontiert werden und wird ebenfalls erst bei der Montage des Filterbalgs durch Wärme aktiviert. Die aktivierte Klebefolie umschließt die Stirnkanten des Filtermediums und verbindet dieses beim Aushärten mit dem Filterelementrahmen. Auf diese Weise können der Filterelementrahmen und der Filterbalg jeweils als Modul vorgefertigt werden, so dass der Fertigungsprozess flexibler gestaltet werden kann. Der Verbindungsprozess des Schweißens ist besonders günstig, wenn der Filterelementrahmen aus einem Material ist, welches durch Wärme erweicht werden kann, insbesondere aus Kunststoff. In diesem Fall kann auf den Klebstoff oder die Klebefolie verzichtet werden. Ferner kann die Oberfläche des Filterelementrahmens insbesondere beim Spiegelschweißen Punkt- beziehungsweise Flächengenau und auch in der Tiefe präzise erweicht werden, so dass die Eindringtiefe des Filterbalgs in die Oberfläche des Filterelementrahmens optimal definiert werden kann. So kann reproduzierbar möglichst wenig Filterfläche für die Verbindung benötigt werden und trotzdem eine optimale Fluiddichtheit zu realisiert werden.

Bei einer weiteren vorteilhaften Ausführungsform kann der Filterelementrahmen mit Aufnahmen, insbesondere Rinnen oder Mulden, ausgestattet werden, in die Klebstoff, insbesondere Schmelzkleber oder wenig fließfähiger Klebstoff eingebracht wird, und die Bereiche der Stirnfalten, die mit dem Filterelementrahmen verbunden werden, und/oder die Stirnkanten des Filterbalgs in die entsprechenden mit Klebstoff versehenen Aufnahmen gedrückt werden. In diesen Aufnahmen werden die entsprechenden Bereiche des Filterbalgs positioniert, bis der Klebstoff ausgehärtet ist, und dieser die Fixierung übernimmt.

Bei einer anderen vorteilhaften Ausgestaltung des Verfahrens kann der Filterbalg mittels eines insbesondere wenig fließfähigen Klebstoffs mit dem Filterelementrahmen verbunden werden und der Filterelementrahmen bis zum Aushärten des Klebstoffs in unterschiedlichen Raumrichtungen hin- und her geschwenkt werden. Durch das Hin-und-herSchwenken wird der Schwerkraft quasi entgegengewirkt und verhindert, dass der Klebstoff auf senkrechten Flächen des Filterelementrahmens weg fließt. Auf diese Weise können senkrechte und waagerechte Flächen des Filterelementrahmens gleichzeitig mit dem Filterbalg verbunden werden, was die Produktionszeit verringert.

Die Aufgabe wird ferner gelöst durch ein Filterelement nach Anspruch 9, bei dem der Filterbalg in Bereichen seiner Stirnfalten mit einem festen Filterelementrahmen fluiddicht verbunden ist und die Stirnkanten des Filterbalgs mit dem Filterelementrahmen fluiddicht verbunden sind, derart, dass der Filterbalg in dem Filterelementrahmen gehalten ist. Ein derartiges Flachfilterelement hat eine genau reproduzierbare Faltenanzahl und effektive Filterfläche. Es ist formstabil gegenüber Temperatur- und Feuchtigkeitseinflüssen. Es kann einfach in ein entsprechendes Filtergehäuse eingebracht und gegenüber diesem abgedichtet werden, um eine Reinfluidseite des Flachfilterelements von einer Rohfluidseite dicht zu trennen. Die Funktionen der Formgebung und Stabilisierung des Filterbalgs und der Abdichtung gegen das Gehäuse sind ferner entkoppelt. Auf diese Weisen können für die jeweilige Funktion optimale Materialien verwendet werden. Zur Stabilisierung ist der Filterelementrahmen vorzugsweise aus einem festen Material, insbesondere aus Kunststoff, das einfach bearbeitet werden kann. Für die Dichtfunktion kann ein elastisches Material verwendet werden. Ferner kann das Verhältnis von effektiver Filterfläche zu den Außenmaßen des Filterelements optimiert werden. Eine Verpackung für das Filterelement kann so äußerst platzsparend ausgestaltet sein, da der Filterelementrahmen ohne überstehende Ränder, wie insbesondere bei aus dem Stand der Technik bekannten Polyurethan(PUR)-Dichtungen, gefertigt werden kann. Die Vorteile des oben beschriebenen Herstellungsverfahrens treffen für das Filterelement entsprechend zu.

Bei einer vorteilhaften Ausführungsform kann das Filtermedium zickzackförmig gefaltet sein, um das Verhältnis von effektiver Filterfläche zum Bauraum zu optimieren.

Vorteilhafterweise können sich die Stirnränder der Stirnfalten auf der gleichen Seite des Filterbalgs befinden, so dass die Stirnränder an einer platzsparenden ebenen Fläche des Filterelementrahmens befestigt sein können.

Ferner kann wenigstens einer der Stirnränder der Stirnfalten und/oder eine Faltkante im Bereich wenigstens einer der Stirnfalten mit dem Filterelementrahmen fluiddicht verbunden sein. Auf diese Weise können die Verluste an Filterfläche, die durch die Verbindung mit dem Filterelementrahmen bedingt sind, minimiert werden.

Das gefaltete Filtermedium ist in den Bereichen seiner Stirnfalte mit einem Basisrahmenteil des Filterelementrahmens fluiddicht verbunden und die Stirnkanten des Filterbalgs sind jeweils mit einem Kanten-Seitenrahmenteil des Filterelementrahmens fluiddicht verbunden. So ist der Filterbalg entlang seiner Ränder geschlossen gegenüber dem Filterelementrahmen abgedichtet.

Der Filterelementrahmen umfasst wenigstens ein Falten-Seitenrahmenteil, das Führungsmittel aufweist, mit denen die Stirnfalten gegen das Basisrahmenteil gedrückt werden können, um die Verbindung des Filterbalgs mit dem Basisrahmenteil zu verbessern.

Bei einer weiteren vorteilhaften Ausführungsform können die Kanten-Seitenrahmenteile, das Basisrahmenteil und gegebenenfalls die Falten-Seitenrahmenteile einstückig, vorzugsweise mittels Biegeverbindungen, insbesondere Filmscharnieren, miteinander verbunden sein. Der Filterelementrahmen kann so einfach als im Wesentlichen flaches, platzsparendes Bauteil vorgefertigt werden und die Rahmenteile erst beim Verbindungsprozess mit dem Filterbalg mittels der Biegeverbindungen entsprechend gefaltet werden.

In einer weiteren vorteilhaften Ausführungsform wird ein Teil des Filtergehäuses durch den Filterelementrahmen, vorzugsweise durch die Seiten-Rahmenteile gebildet. Das Filterelement kann dabei z. B. mit einem Zuganker zwischen den anschließenden Gehäuseteilen verklemmt oder durch Schnapphaken oder Schraubverbindungen beidseitig mit den anschließenden Gehäuseteilen verbunden werden.

Ferner kann vorteilhafterweise eine Dichteinrichtung vorgesehen sein, die geeignet ist, bei einer Anordnung des Filterelements in einem Filtergehäuse, eine Reinfluidseite des Filterelements von einer Rohfluidseite fluiddicht zu trennen. Die Dichteinrichtung kann in Form und Material auf die Dichtfunktion optimiert sein, da sie keine weitere Funktion, beispielsweise Halte- oder Stabilisierungsfunktion, hat. Insbesondere wird sie für die Stabilisierung des Filterbalgs nicht benötigt. Die Dichteinrichtung kann auch als Lebensbauteil in dem Filtergehäuse angeordnet sein, so dass bei Bedarf lediglich das Filterelement ausgetauscht werden muss.

In einer weiteren vorteilhaften Ausführungsform ist das Filterelement bevorzugt rechteckig ausgeführt, es kann jedoch auch trapezförmig gestaltet sein.

Die Aufgabe wird außerdem gelöst durch eine Filtervorrichtung für Fluide insbesondere eines Kraftfahrzeugs mit einem Filtergehäuse zur Aufnahme eines erfindungsgemäßen Filterelements.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen
- Figuren 1 bis 7: schematisch ein Flachfilterelement in unterschiedlichen Phasen der Herstellung;
- Figur 8: schematisch einen Ausschnitt eines Luftfilters mit einem Flachfilterelement gemäß einem zweiten Ausführungsbeispiel, das in einem Filtergehäuse angeordnet ist;
- Figur 9: schematisch ein drittes Ausführungsbeispiel eines Flachfilterelements, dessen Filterelementrahmen einen Stützrahmen aufweist;
- Figur 10: schematisch einen Ausschnitt eines Luftfilters mit einem Flachfilterelement gemäß einem vierten Ausführungsbeispiel, wobei der Filterelementrahmen einen Teil des Gehäuses bildet.

In den Figuren sind gleiche Bauteile mit gleichen Bezugszeichen versehen.

### Ausführungsform(en) der Erfindung

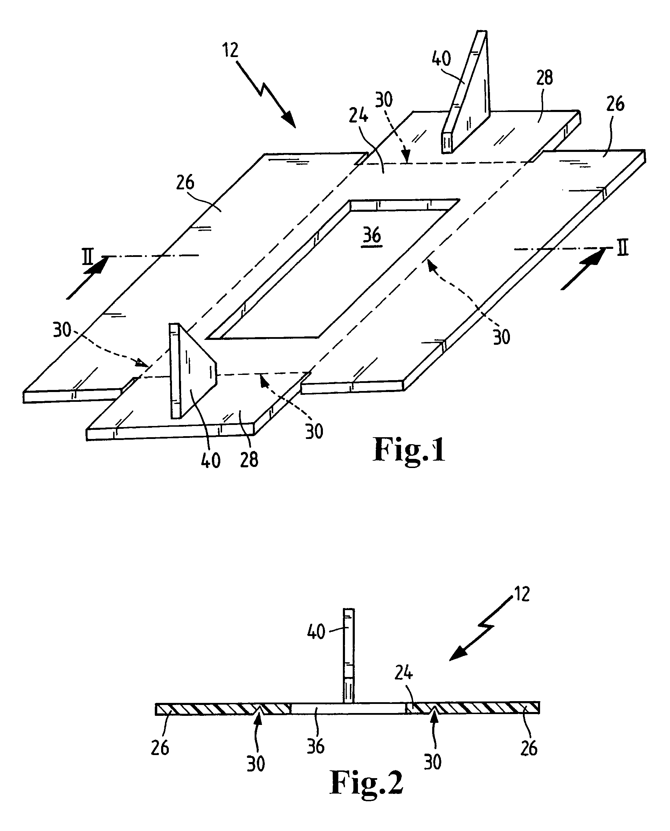

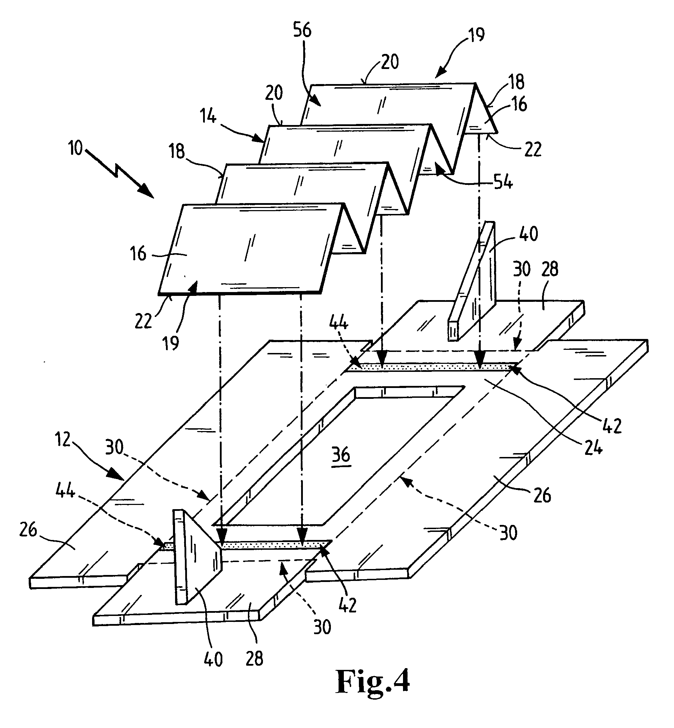

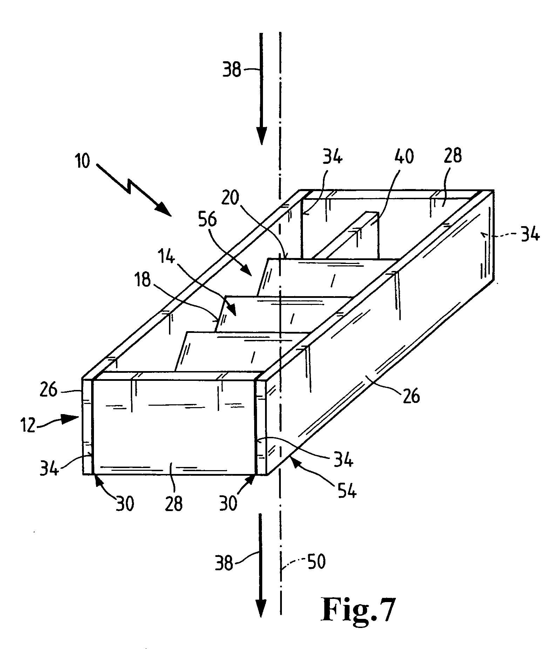

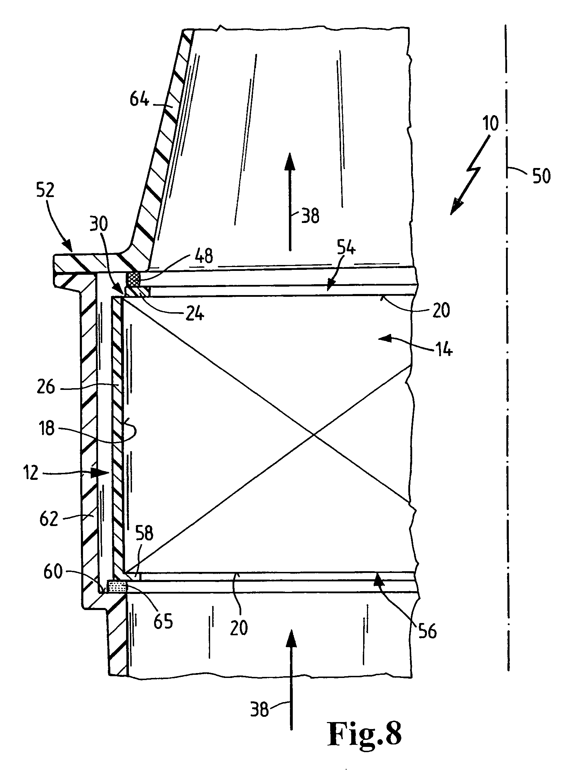

In den Figuren 1 bis 7 ist ein rechteckiges Flachfilterelement in unterschiedlichen Phasen der Herstellung dargestellt. Das Flachfilterelement ist in den Figuren 4 bis 7 insgesamt mit dem Bezugszeichen 10 versehen. Figur 2 zeigt einen Schnitt eines Filterelementrahmens 12 des Flachfilterelements 10 entlang einer Schnittlinie II-II aus Figur 1. Das fertig montierte Flachfilterelement 10 ist in der Figur 7 gezeigt. Das Flachfilterelement 10 kann in ein Filtergehäuse eines Luftfilters zur Filterung von Verbrennungsluft einer Brennkraftmaschine eingebaut werden. Dies ist beispielhaft an Hand eines zweiten, weiter unten beschriebenen Ausführungsbeispiels in der Figur 8 gezeigt. Das Flachfilterelement 10 kann bei Bedarf, beispielsweise bei Erreichung einer Beladungsgrenze, einfach ausgetauscht werden.

Das Flachfilterelement 10 umfasst einen in den Figuren 4 bis 7 gezeigten Filterbalg 14 aus zickzackförmig gefaltetem Filtermedium. Eine gedachte Umhüllende des Filterbalgs 14 ist quaderförmig. Der Filterbalg 14 hat eine Reinluftseite 54, in den Figuren 4 bis 7 unten, eine Rohluftseite 56, oben, zwei Stirnseite 19 in den Figuren 4 bis 7 im Vorder- beziehungsweise Hintergrund, und zwei Stirnkanten, rechts und links. Der Filterbalg 14 ist an seinen Stirnfalten 16 und seinen Stirnkanten 18 offen, das heißt, weder die Stirnfalten 16, noch die Stirnkanten 18 sind miteinander verbunden. Die Stirnfalten 16 sind die äußeren Falten an den Stirnseiten 19 des Filterbalgs 14. Sie verlaufen parallel zu Faltkanten 20, entlang denen das Filtermedium gefaltet ist. Die Stirnkanten 18 haben den zickzackförmigen Verlauf der Faltung.

Zwei Stirnränder 22 der Stirnfalten 16 befinden sich auf der gleichen Reinluftseite 54 des Filterbalgs 14, welche in den Figuren 4 bis 7 einem Basisrahmenteil 24 des Filterelementrahmens 12 zugewandt ist.

Der Filterelementrahmen 12 ist aus Kunststoff und umfasst das rechteckige Basisrahmenteil 24, zwei rechteckige Kanten-Seitenrahmenteile 26 und zwei rechteckige Falten-Seitenrahmenteile 28. Die Kanten-Seitenrahmenteile 26 und die Falten-Seitenrahmenteile 28 sind rechtwinklig zueinander und zu dem Basisrahmenteil 24 angeordnet.

Die Kanten-Seitenrahmenteile 26 sind an gegenüberliegenden Seiten des Basisrahmenteils 24 über Filmscharniere 30 einstückig und luftdicht mit dem Basisrahmenteil 24 verbunden. An den beiden anderen gegenüberliegenden Seiten des Basisrahmenteils 24 sind die Falten-Seitenrahmenteile 28 ebenfalls über Filmscharniere 30 einstückig und luftdicht mit dem Basisrahmenteil 24 verbunden.

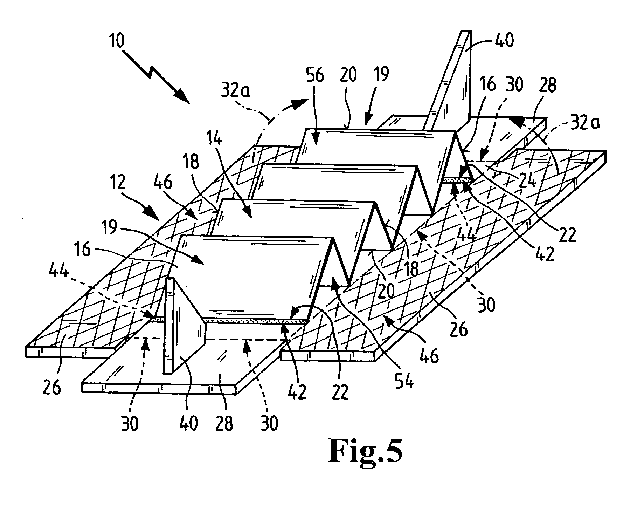

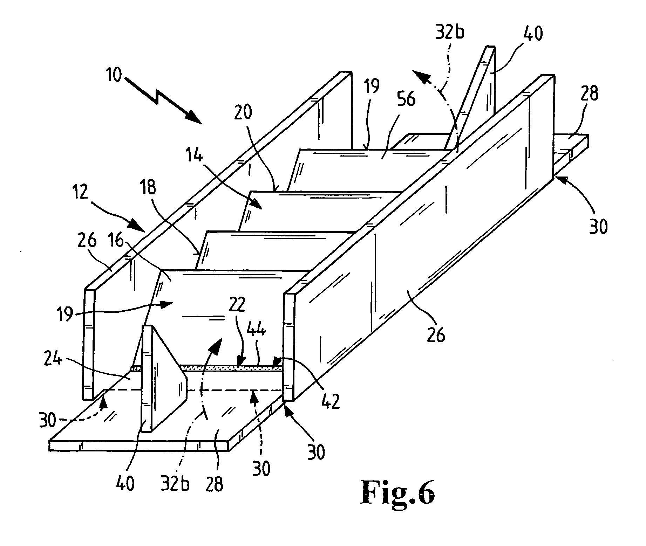

Die Filmscharniere 30 sind als gerade Kerben auf der dem Filterbalg 14 gegenüberliegenden Seite des ursprünglich flachen Filterelementrahmens 12 realisiert. Die Filmscharniere 30 der Kanten-Seitenrahmenteile 26 sind im Schnitt in der Figur 2 gezeigt. Die Kerben geben in den Figuren 1 und 3 bis 6 gestrichelt angedeutete Biegelinien vor, an denen die Falten-Seitenrahmenteile 28 beziehungsweise die Kanten-Seitenrahmenteile 26 relativ zum Basisrahmenteil 24 zum Filterbalg 14 hin umgeklappt werden können. Die jeweiligen Klapprichtungen sind in den Figuren 5 und 6 mit Pfeilen 32a beziehungsweise 32b angedeutet.

Die Kanten-Seitenrahmenteile 26 und die Falten-Seitenrahmenteile 28 sind an den Kanten 34, an denen sie aneinanderstoßen luftdicht miteinander verklebt (Figur 7).

Das Basisrahmenteil 24 hat eine in den Figuren 1 bis 4 gezeigte rechteckige Luftdurchtrittsöffnung 36. Die Luftdurchtrittsöffnung 36 ist im Verhältnis zu den Außenabmessungen des Basisrahmenteils 24 so groß bemessen, dass das Basisrahmenteil 24 im Grunde lediglich einen stabilen Rahmen für den Filterbalg 14 bildet. Die Rohluft kann von der Rohluftseite 56 den Filterbalg 14 durchströmen und gereinigt werden. Die Reinluft kann von der Reinluftseite 54 durch die Luftdurchtrittsöffnung 36 aus dem Flachfilterelement 10 heraus strömen. Die Hauptströmungsrichtung in das Flachfilterelement 10 und aus diesem heraus ist in der Figur 7 durch Pfeile 38 angedeutet.

Die Falten-Seitenrahmenteile 28 weisen je einen Führungskeil 40 auf, die sich beim fertig montierten Flachfilterelement 10 (Figur 7) zu der jeweiligen Stirnfalte 16 des Filterbalgs 14 erstrecken und deren schräge Seiten an den Stirnfalten 16 flächig anliegen. Mit den Führungskeilen 40 werden bereits beim Umklappen der Falten-Seitenrahmenteile 28 in ihre Endposition die Stirnfalten 16 gegen das Basisrahmenteil 24 gedrückt.

Der Filterbalg 14 ist, wie in den Figuren 5 und 6 gezeigt, mit den Stirnrändern 22 mittels Schmelzkleber 42 jeweils in einer Rinne 44 des Basisrahmenteils 24 luftdicht eingeklebt. Die beiden Rinnen 44 erstrecken sich zwischen den beiden Kanten-Seitenrahmenteilen 26 parallel zu den Falten-Seitenrahmenteilen 28. Die Rinnen 44 dienen der Aufnahme des Schmelzklebers 42 und definieren reproduzierbar die Position für die Stirnränder 22.

Die Stirnkanten 18 des Filterbalgs 14 sind, wie in den Figuren 6 und 7 gezeigt, mittels einem wenig fließfähigen Klebstoff 46, der in der Figur 5 mit einer Schraffur angedeutet ist, mit den jeweiligen Kanten-Seitenrahmenteilen 26 luftdicht verbunden.

Der Filterbalg 14 ist so insgesamt, wie in der Figur 7 gezeigt, in dem Filterelementrahmen 12 gehalten.

Die Herstellung des Flachfilterelements 10 erfolgt wie nachfolgend beschrieben:

Der Filterelementrahmen 12 wird zunächst als im Wesentlichen flaches Bauteil (Figur 1) geformt, wobei die Führungskeile 40 und die Filmscharniere 30 im gleichen Arbeitsgang mit angebracht werden.

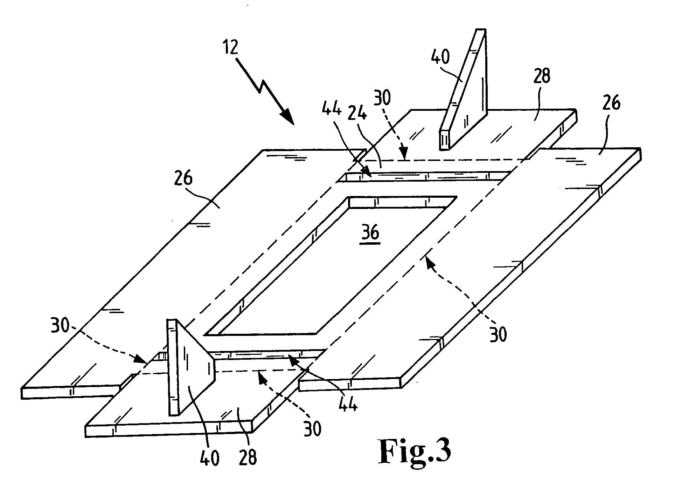

Die Rinnen 44 werden in das Basisrahmenteil 24 eingebracht (Figur 3). Dies kann auch in dem gleichen Arbeitsgang wie das Anbringen der Führungskeile 40 und der Filmscharniere 30 oder davor erfolgen.

Das Filtermedium wird zickzackförmig so zu dem Filterbalg 14 gefaltet, dass sich die Stirnränder 22 der Stirnfalten 16 auf der gleichen Seite des Filterbalgs 14 befinden (Figur 4). Die Anzahl der Falten wird dabei vorgegeben.

Der Schmelzkleber 42 wird in die Rinnen 44 gefüllt.

Die Stirnränder 22 des Filterbalgs 14 werden in den Schmelzkleber 42 gesteckt, so dass sie eine luftdichte Verbindung zwischen dem Filterbalg 14 und dem Basisrahmenteil 24 realisieren.

Der thixotrope Klebstoff 46 wird flächig auf die Kanten-Seitenrahmenteile 26 aufgebracht (Figur 5). Die Kanten-Seitenrahmenteile 26 werden in Klapprichtung 32a um 90° um die Filmscharniere 30 zu den Stirnkanten 18 des Filterbalgs 14 geklappt. Die Stirnkanten 18 werden in den thixotropen Klebstoff 46 eingepresst, dieser dehnt sich aus und umfasst luftdicht die Stirnkanten 18 in einem im Verhältnis zu der gesamten Filterfläche schmalen Bereich. Das Umklappen der beiden Kanten-Seitenrahmenteile 26 kann gleichzeitig oder nacheinander erfolgen.

Die beiden Falten-Seitenrahmenteile 28 werden in Klapprichtung 32b um 90° relativ zum Basisrahmenteil 24 geklappt (Figur 6). Dabei werden mit den Führungskeilen 40 der Falten-Seitenrahmenteile 28 die Stirnfalten 16 gegen das Basisrahmenteil 24 gedrückt und in den Schmelzkleber 42 gepresst. Das Umklappen der Falten-Seitenrahmenteile 28 kann auch vor oder gleichzeitig mit dem Umklappen der Kanten-Seitenrahmenteile 26 erfolgen.

Die Seiten der Kanten-Seitenrahmenteile 26 und der Falten-Seitenrahmenteile 28, die aneinanderstoßen, werden luftdicht miteinander verklebt. Dies kann auch in einem Arbeitsgang mit dem Umklappen der Falten-Seitenrahmenteile 28 und der Kanten-Seitenrahmenteile 26 erfolgen.

Der Filterelementrahmen 12 wird bis zum Aushärten des Schmelzklebers 42 und des thixotropen Klebstoffs 46 in unterschiedlichen Raumrichtungen hin- und her geschwenkt. Dies geschieht, um zu verhindern, dass der Klebstoff 46 oder der Schmelzkleber 42 von den jeweiligen Verbindungsstellen wegfließt, solange er noch weich ist. Nach Aushärten des Klebstoffs 46 und des Schmelzklebers 42 ist der Filterbalg 14 luftdicht und stabil mit dem Filterelementrahmen 12 verbunden.

Zum Schluß wird die Dichtung 48 am Filterelementrahmen 12 befestigt.

Ein Ausschnitt eines zweiten Ausführungsbeispiels eines Flachfilterelements 10, das in einem Filtergehäuse 52 eines Kraftfahrzeugluftfilters eingebaut ist, ist in der Figur 8 in einem Schnitt dargestellt. Diejenigen Elemente, die zu denen des ersten, in den Figuren 1 bis 7 beschriebenen Ausführungsbeispiels ähnlich sind, sind mit denselben Bezugszeichen versehen, so dass bezüglich deren Beschreibung auf die Ausführungen zum ersten Ausführungsbeispiel Bezug genommen wird. Dieses Ausführungsbeispiel unterscheidet sich von ersten dadurch, dass die dem Basisrahmenteil 24 abgewandten Seiten der Kanten-Seitenrahmenteile 26 und der Falten-Seitenrahmenteile 28 jeweils einen sich radial zur Achse 50 des Flachfilterelements 10 erstreckenden Kragen 58 aufweisen. Die Kragen 58 umgreifen stabilisierend den Filterbalg 14 auf der dem Basisrahmenteil 24 gegenüberliegenden Seite. Die Dichtung 48 ist am Basisrahmenteil 24 angebracht und liegt an der Gehäusehaube 64 an, wodurch die Reinluftseite 54 von der Rohluftseite 56 getrennt wird. Rohluftseitig weist das Filterelement 10 vorzugweise flexible Abstandshalter 65 auf, die das Verspannen erleichtern und einen Toleranzausgleich ermöglichen.

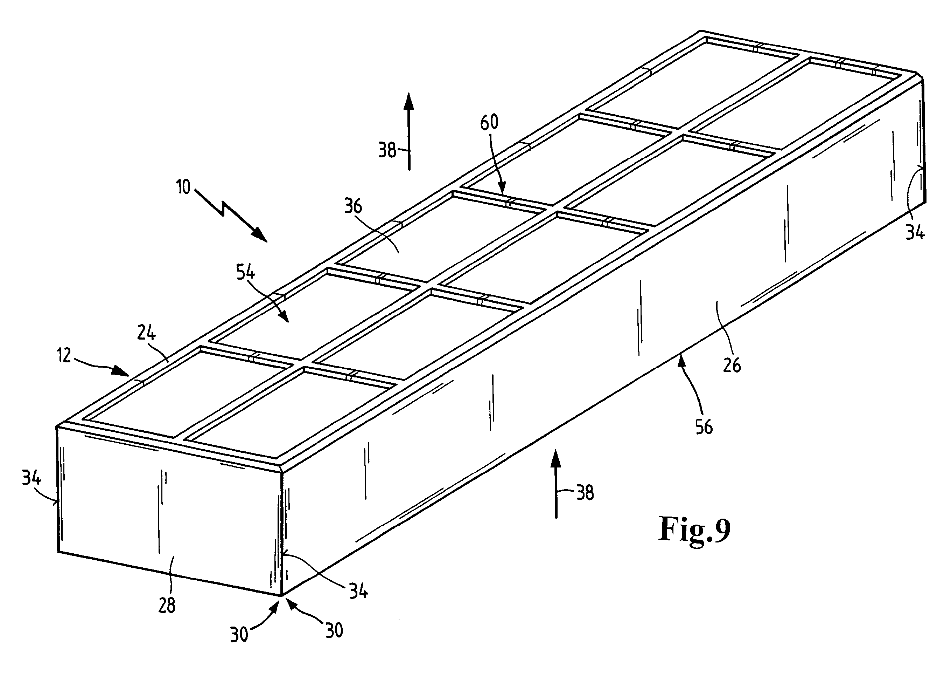

In der Figur 9 ist ein drittes Ausführungsbeispiel eines Flachfilterelements 10 mit Blickrichtung auf das Basisrahmenteil 24 gezeigt. Diejenigen Elemente, die zu denen des ersten, in den Figuren 1 bis 7 beschriebenen Ausführungsbeispiels ähnlich sind, sind mit denselben Bezugszeichen versehen, so dass bezüglich deren Beschreibung auf die Ausführungen zum ersten Ausführungsbeispiel Bezug genommen wird. Im Unterschied zum ersten Ausführungsbeispiel ist in der Luftdurchtrittsöffnung 36 ein Stützrahmen 66 einstückig an das Basisrahmenteil 24 angeformt.

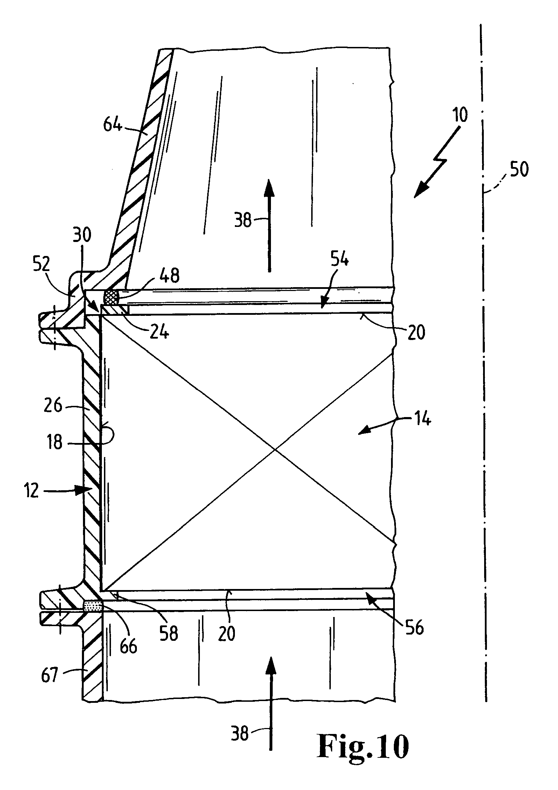

In Figur 10 ist ein weiteres Ausführungsbeispiel eines Flachfilterelements 10 in einem Filtergehäuse 52 gezeigt. Hierbei bilden die Seitenrahmenteile 26, 28 gleichzeitig einen Teil des Filtergehäuses 52. Das Filterelement 10 ist durch Befestigungsmittel (z. B. Schrauben oder Schnappverbinder, nicht dargestellt) zwischen Gehäusehaube 64 und Gehäuseunterteil 67 befestigt. Die Abdichtung zwischen Rohluftseite 56 und Reinluftseite 54 erfolgt mit der Dichtung 48, die auf dem Basisrahmenteil 24 oder an der Gehäusehaube 64 angebracht ist. Rohluftseitig weist das Flachfilterelement 10 eine weitere Dichtung bzw. ein flexibles Element 66 zum Toleranzausgleich auf.

Bei allen oben beschriebenen Ausführungsbeispielen eines Flachfilterelements 10 und eines Verfahrens zur Herstellung eines solchen sind unter anderem folgende Modifikationen möglich:

Die Erfindung ist nicht beschränkt auf rechteckige Flachfilterelemente 10 zur Filterung von Verbrennungsluft. Vielmehr kann sie auch bei andersartigen Flachfilterelementen 10 zur Filterung von andersartigen flüssigen oder gasförmigen Fluiden, beispielsweise Öl, Wasser oder Kraftstoff, auch in Anwendungsbereichen außerhalb von Brennkraftmaschinen, insbesondere von Kraftfahrzeugen, eingesetzt werden.

Die Hauptströmungsrichtung 38 kann auch umgekehrt durch das Flachfilterelement 10 verlaufen, so dass die Rohluft durch die Luftdurchtrittsöffnung 36 in das Flachfilterelement 10 einströmt.

Das Flachfilterelement 10 kann statt rechtwinklig auch andersförmig, beispielsweise gebogen, sein.

Das Filtermedium kann statt zickzackförmig auch andersartig, beispielsweise wellenartig, gefaltet sein.

Anstelle der Faltenanzahl kann auch die Länge des gefalteten Filterbalgs 14 vorgegeben werden.

Statt mit den Stirnrändern 22 kann der Filterbalg 14 auch in anderen Bereichen seiner Stirnfalten 16, beispielsweise einer Faltkante 20, mit dem Filterelementrahmen 12 verbunden sein.

Die Stirnränder 22 der Stirnfalten 16 können statt auf der gleichen Seite, der Rohluftseite 56 oder der Reinluftseite 54, des Filterbalgs 14 auch auf gegenüberliegen Seiten angeordnet sein. In diesem Fall kann der Filterbalg 14 an der einen Stirnseite 19 mit dem dortigen Stirnrand 22 und an der anderen Stirnseite19 mit der dortigen Faltkante 20 mit dem Filterelementrahmen 12 verbunden werden.

Das gefaltete Filtermedium kann im Bereich seiner Stirnfalten 16 statt mit dem Basisrahmenteil 24 auch mit den Falten-Seitenrahmenteilen 28 des Filterelementrahmens 12 verbunden sein.

Anstelle der Filmscharniere 30 können auch andersartige Biegeverbindungen verwendet werden, welche eine fluiddichte und flexible Verbindung der entsprechenden Seitenrahmenteile 26 und 28 mit dem Basisrahmenteil 24 ermöglichen.

Statt aus einem Stück gefaltet, kann der Filterelementrahmen 12 auch aus separaten Kanten-Seitenrahmenteilen 26, einem separaten Basisrahmenteil 24 und separaten Falten-Seitenrahmenteile 28 fluiddicht zusammengesetzt werden.

Anstelle der Führungskeile 40 können auch andersartige Führungsmittel vorzugsweise an den Falten-Seitenrahmenteilen 28 vorgesehen sein. Es kann auch eine Mehrzahl von Führungskeile 40 an jedem Falten-Seitenrahmenteil 28 angeordnet sein.

Auf eines oder beide Falten-Seitenrahmenteile 28 kann auch verzichtet werden. Das Basisrahmenteil 24 und die Kanten-Seitenrahmenteile 26 können dann in anderer Weise stabilisiert und gegen das Filtergehäuse 52 abgedichtet werden, um die Rohluftseite 56 von der Reinluftseite 54 luftdicht zu trennen.

Die Stirnkanten 18 des Filterbalgs 14 können statt mit zähflüssigem Klebstoff 46 auch in andere Weise fluiddicht mit den Kanten-Seitenrahmenteilen 26 verbunden werden. Beispielsweise können die Stirnkanten 18 auch mittels Spiegel-Schweißen oder IR-Schweißen fluiddicht mit den Kanten-Seitenrahmenteilen 26 verbunden werden. Es kann auch eine spezielle Klebefolie auf die Kanten-Seitenrahmenteilen 26 präpariert werden, die die Eigenschaft hat, dass sie beim Einpressen der Stirnkanten 18 oder durch Erwärmung beispielsweise mittels IR-Strahlung aktiviert wird, sich ausdehnt und die Stirnkanten 18 in definierter Weise in einem schmalen Bereich umfasst. In ähnlicher Weise können die Stirnränder 22 mit dem Basisrahmenteil 24 verbunden werden, statt hierfür Schmelzkleber 42 zu verwenden.

Die Kanten-Seitenrahmenteile 26 können zusätzlich Mulden oder Rinnen zur Aufnahme eines Klebstoffs 46 aufweisen. Diese können auch so ausgestaltet sein, dass sie dem Zick-Zack-Verlauf der Stirnkanten 18 entsprechen, wodurch der Filterbalg 14 zusätzlich stabilisiert wird und seine Form definiert und reproduzierbar vorgegeben wird.

Auf die Rinnen 44 im Basisrahmenteil 24 kann auch verzichtet werden. Die Stirnränder 22 können ohne die Verwendung von Rinnen 44 beispielsweise mittels Spiegel-Schweißen fluiddicht mit dem Basisrahmenteil 24 verbunden werden, wobei die Position der Stirnränder 22 durch präzises, bereichsweises Erweichen des Basisrahmenteils 24 vorgegeben werden kann.

Die Kanten-Seitenrahmenteile 26 und die Falten-Seitenrahmenteile 28 können an den aneinanderstoßenden Seiten statt verklebt auch in andere Weise, beispielsweise mittels Schweißen oder der oben beschriebenen speziellen Klebefolie, fluiddicht verbunden werden.

Die Dichteinrichtung kann statt an dem Flachfilterelement 10 auch als Lebensbauteil in dem Filtergehäuse 52 angeordnet sein.

Bei der Herstellung kann statt zuerst die Stirnränder 22 des Filterbalgs 14 mit dem Basisrahmenteil 24 zu verbinden, erst eine der Stirnkanten 18 mit dem entsprechenden Kanten-Seitenrahmenteil 26 verbunden werden. Dieses Kanten-Seitenrahmenteil 26 kann anschließend relativ zu den Basisrahmenteil 24 umgeklappt werden. Dabei können die Stirnränder 22 des Filterbalgs 14 mit dem Basisrahmenteil 24 verbunden werden. Anschließend kann das zweite Kanten-Seitenrahmenteil 26 relativ zu den Basisrahmenteil 24 umgeklappt und mit der zweiten Stirnkante 18 des Filterbalgs 14 verbunden werden.

Bei der Verwendung von separaten Kanten-Seitenrahmenteilen 26 können auch zunächst in einem einzigen Arbeitsgang die beiden Kanten-Seitenrahmenteile 26 mit dem Filterbalg 14 verbunden werden. Anschließend kann das Basisrahmenteil 24 mit dem Filterbalg 14 und den Kanten-Seitenrahmenteile 26 verbunden werden.

## Patentansprüche

1. Verfahren zur Herstellung eines insbesondere rechteckigen Flachfilterelements (10) für Fluide, insbesondere eines Kraftfahrzeugs, bei dem ein Filtermedium zu einem Filterbalg (14) gefaltet wird, insbesondere das Filtermedium zickzackförmig gefaltet wird, wobei der Filterbalg (14) in Bereichen (22) seiner Stirnfalten (16) mit einem festen Filterelementrahmen (12) fluiddicht verbunden wird und die Stirnkanten (18) des Filterbalgs (14) mit dem Filterelementrahmen (12) fluiddicht verbunden werden, derart, dass der Filterbalg (14) in dem Filterelementrahmen (12) gehalten wird, wobei der Filterbalg (14) in den Bereichen (22) seiner Stirnfalten (16) mit einem Basisrahmenteil (24) des Filterelementrahmens (12) fluiddicht verbunden wird und die Stirnkanten (18) des Filtermediums jeweils mit einem Kanten-Seitenrahmenteil (26) des Filterelementrahmens (12) fluiddicht verbunden werden und wobei zwischen den Kanten-Seitenrahmenteilen (26) jeweils ein Falten-Seitenrahmenteil (28) angeordnet und fluiddicht mit dem Basisrahmenteil (24) und den Kanten-Seitenrahmenteilen (26) verbunden wird, **dadurch gekennzeichnet, dass** die Falten-Seitenrahmenteile (28) Führungsmittel (40) aufweisen, wobei die Stirnfalten (16) mit den Führungsmittel (40) der Falten-Seitenrahmenteile (28) gegen das Basisrahmenteil (24) gedrückt werden.

2. Verfahren nach Anspruch 1, **dadurch gekennzeichnet, dass** die Kanten-Seiten-rahmenteile (26) und das Basisrahmenteil (24) fluiddicht miteinander verbunden werden.

3. Verfahren nach einem der vorigen Ansprüche, **dadurch gekennzeichnet, dass** die Kanten-Seitenrahmenteile (26) und die Falten-Seitenrahmenteile (28) fluiddicht miteinander verklebt oder verschweißt werden.

4. Verfahren nach einem der vorigen Ansprüche, **dadurch gekennzeichnet, dass** die zunächst separaten Kanten-Seitenrahmenteile (26) mit dem separaten Basisrahmenteil (24) und gegebenenfalls mit den separaten Falten-Seitenrahmenteilen (28) fluiddicht verbunden werden.

5. Verfahren nach einem der Ansprüche 1 bis 3, **dadurch gekennzeichnet, dass** die Kanten-Seitenrahmenteile (26), das Basisrahmenteil (24) und gegebenenfalls die Falten-Seitenrahmenteile (28) einstückig vorzugsweise mittels Biegeverbindungen, insbesondere Filmscharnieren (30), mit einander verbunden und zu dem Filterelementrahmen (12) gestaltet werden.

6. Verfahren nach einem der vorigen Ansprüche, **dadurch gekennzeichnet, dass** der Filterbalg (14) mittels Kleben, insbesondere mittels eines wenig fließfähigen Klebstoffs (42, 46) oder einer Klebefolie, die aktiviert, insbesondere erwärmt und dadurch formbar wird, oder Schweißen, insbesondere Spiegel- oder IR-Schweißens, mit dem Filterelementrahmen (12) verbunden wird.

7. Verfahren nach einem der Ansprüche 1 bis 5 **dadurch gekennzeichnet, dass** der Filterelementrahmen (12) mit Aufnahmen, insbesondere Rinnen (44) oder Mulden, ausgestattet wird, in die Klebstoff, insbesondere Schmelzkleber (42) oder wenig fließfähiger Klebstoff eingebracht wird, und die Bereiche (22) der Stirnfalten (16), die mit dem Filterelementrahmen (12) verbunden werden, und/oder die Stirnkanten des Filterbalgs (14) in die entsprechenden mit Klebstoff (42) versehenen Aufnahmen gedrückt werden.

8. Verfahren nach einem der vorigen Ansprüche, **dadurch gekennzeichnet, dass** der Filterbalg (14) mittels eines insbesondere wenig fließfähigen Klebstoffs (46) mit dem Filterelementrahmen (12) verbunden wird und der Filterelementrahmen (12) bis zum Aushärten des Klebstoffs (46) in unterschiedlichen Raumrichtungen hin- und her geschwenkt wird.

9. Flachfilterelement, insbesondere rechteckiges Flachfilterelement (10), für Fluide, insbesondere eines Kraftfahrzeugs, mit einem Filterbalg (14) aus gefaltetem Filtermedium, insbesondere aus zickzackförmig gefaltetem Filtermedium, wobei das Flachfilterelement insbesondere nach dem Verfahren nach einem der vorigen Ansprüche hergestellt ist, wobei der Filterbalg (14) in Bereichen (22) seiner Stirnfalten (16) mit einem festen Filterelementrahmen (12) fluiddicht verbunden ist und die Stirnkanten (18) des Filterbalgs (14) mit dem Filterelementrahmen (12) fluiddicht verbunden sind, derart, dass der Filterbalg (14) in dem Filterelementrahmen (12) gehalten ist, wobei der Filterbalg (14) in den Bereichen (22) seiner Stirnfalten (16) mit einem Basisrahmenteil (24) des Filterelementrahmens (12) fluiddicht verbunden ist und die Stirnkanten (18) des Filterbalgs (14) jeweils mit einem Kanten-Seitenrahmenteil (26) des Filterelementrahmens (12) fluiddicht verbunden sind, wobei zwischen den Kanten-Seitenrahmenteilen (26) jeweils ein Falten-Seitenrahmenteil (28) angeordnet und fluiddicht mit dem Basisrahmenteil (24) und den Kanten-Seitenrahmenteilen (26) verbunden ist, **dadurch gekennzeichnet, dass** der Filterelementrahmen (12) wenigstens ein Falten-Seitenrahmenteil (28) umfasst, das Führungsmittel (40) aufweist, mit denen die Stirnfalten (16) gegen das Basisrahmenteil (24) gedrückt werden können.

10. Flachfilterelement nach Anspruch 9, **dadurch gekennzeichnet, dass** die Kanten-Seitenrahmenteile (26), das Basisrahmenteil (24) und gegebenenfalls die Falten-Seitenrahmenteile (28) einstückig, vorzugsweise mittels Biegeverbindungen, insbesondere Filmscharnieren (30), mit einander verbunden sind.

11. Flachfilterelement (10) nach Anspruch 9 oder 10, **gekennzeichnet durch** eine Dichteinrichtung (48), die geeignet ist bei einer Anordnung des Flachfilterelements (10) in einem Filtergehäuse (52), eine Reinfluidseite (54) des Flachfilterelements (10) von einer Rohfluidseite (56) fluiddicht zu trennen.

12. Filtervorrichtung für Fluide insbesondere eines Kraftfahrzeugs mit einem Filtergehäuse (52) zur Aufnahme eines Flachfilterelements (10) nach einem der Ansprüche 9 bis 11.

## Claims

1. Method for manufacturing an in particular rectangular flat filter element (10) for fluids, in particular of a motor vehicle with a filter medium folded to form a filter bellows (14), the filter medium being in particular zigzag-folded, the filter bellows (14) being fluid-tightly connected in areas (22) of its front folds (16) with a fixed filter element frame (12) and the end edges (18) of the filter bellows (14) being fluid-tightly connected with the filter element frame (12) in such a way that the filter bellows (14) is held in the filter element frame (12), the filter bellows (14) being fluid-tightly connected in the areas (22) of its front folds (16) with a base frame part (24) of the filter element frame (12) and the end edges (18) of the filter medium being each fluid-tightly connected with an edge-side frame part (26) of the filter element frame (12) and a folding-side frame part (28) each being disposed between the edge-side frame parts (26) and fluid-tightly connected with the base frame part (24) and the edge-side frame parts (26), **characterized in that** the folding-side frame parts (28) feature guide means (40), the front folds (16) being pressed together with the guide means (40) of the folding-side frame parts (28) against the base frame part (24).

2. Method according to claim 1, **characterized in that** the edge-side frame parts (26) and the base frame part (24) are fluid-tightly connected with each other.

3. Method according to one of the above claims, **characterized in that** the edge-side frame parts (26) and the folding-side frame parts (28) are fluid-tightly connected with each other by gluing or welding.

4. Method according to one of the above claims, **characterized in that** the initially separate edge-side frame parts (26) are fluid-tightly connected with the separate base frame part (24) and, where appropriate, with the separate folding-side frame parts (28).

5. Method according to one of the claims 1 to 3, **characterized in that** the edge-side frame parts (26), the base frame part (24), and, where appropriate, the folding-side frame parts (28) are connected with each other as one-piece, preferably by means of bending connections, in particular film hinges (30) and shaped to form the filter element frame (12).

6. Method according to one of the above claims, **characterized in that** the filter bellows (14) is connected with the filter element frame (12) by means of gluing, in particular by means of a moderately fluid adhesive (42, 46) or of an adhesive film which is activated, in particular heated, thus becoming malleable, or by means of welding, in particular mirror or IR welding.

7. Method according to one of the claims 1 to 5, **characterized in that** the filter element frame (12) is provided with receptacles, in particular grooves (44) or recesses, into which adhesive, in particular hotmelt adhesive (42) or less fluid adhesive is introduced, and that the areas (22) of the front folds (16), which are connected with the filter element frame (12), and/or the end edges of the filter bellows (14) are pressed into the corresponding receptacles provided with adhesive (42).

8. Method according to one of the above claims, **characterized in that** the filter bellows (14) is connected with the filter element frame (12) by means of an in particular moderately fluid adhesive (46) and that the filter element frame (12) is swung back and forth in different spatial directions until hardening of the adhesive (46).

9. Flat filter element, in particular rectangular flat filter element (10) for fluids, in particular of a motor vehicle, with a filter bellows (14) made of folded filter medium, in particular of zigzag-folded filter medium, the flat filter element being manufactured in particular according to the method according to one of the above claims, the filter bellows (14) being fluid-tightly connected in areas (22) of its front folds (16) with a fixed filter element frame (12) and the end edges (18) of the filter bellows (14) being fluid-tightly connected with the filter element frame (12) in such a way that the filter bellows (14) is held in the filter element frame (12), the filter bellows (14) being fluid-tightly connected in the areas (22) of its front folds (16) with a base frame part (24) of the filter element frame (12) and the end edges (18) of the filter bellows (14) being each fluid-tightly connected with an edge-side frame part (26) of the filter element frame (12), a folding-side frame part (28) being each disposed between the edge-side frame parts (26) and fluid-tightly connected with the base frame part (24) and the edge-side frame parts (26), **characterized in that** the filter element frame (12) comprises at least one folding-side frame part (28) which features guide means (40), by means of which the front folds (16) can be pressed against the base frame part (24).

10. Flat filter element according to claim 9, **characterized in that** the edge-side frame parts (26), the base frame part (24), and, where appropriate, the folding-side frame parts (28) are connected with each other as one-piece, preferably by means of bending connections, in particular film hinges (30).

11. Flat filter element (10) according to claim 9 or 10, **characterized by** a sealing device (48) which is capable, with an assembly of the flat filter element (10) in a filter housing (52), of fluid-tightly separating a clean fluid side (54) of the flat filter element (10) from a raw fluid side (56).

12. Filtering device for fluids, in particular of a motor vehicle with a filter housing (52) for accommodating a flat filter element (10) according to one of the claims 9 to 11.

## Revendications

1. Procédé de fabrication d'un élément filtrant plat (10) en particulier rectangulaire, pour des fluides, en particulier d'un véhicule automobile, selon lequel un milieu filtrant est plié pour produire un soufflet filtrant (14), notamment selon lequel le milieu filtrant est plié en accordéon, le soufflet filtrant (14) étant relié, dans les zones (22) de ses plis frontaux (16), de façon étanche aux fluides à un cadre d'élément filtrant (12) fixe et les bords frontaux (18) du soufflet filtrant (14) étant reliés de façon étanche aux fluides au cadre d'élément filtrant (12), de telle sorte que le soufflet filtrant (14) est maintenu dans le cadre d'élément filtrant (12), le soufflet filtrant (14) étant relié, dans les zones (22) de ses plis frontaux (16), de façon étanche aux fluides à un élément de cadre de base (24) du cadre d'élément filtrant (12) et les bords frontaux (18) du milieu filtrant étant reliés de façon étanche aux fluides respectivement à un élément de cadre latéral des bords (26) du cadre d'élément filtrant (12), et respectivement un élément de cadre latéral des plis (28) étant disposé entre les éléments de cadre latéral des bords (26) et relié de façon étanche aux fluides à l'élément de cadre de base (24) et aux éléments de cadre latéral des bords (26), **caractérisé en ce que** les éléments de cadre latéral des plis (28) présentent des éléments de guidage (40), les plis frontaux (16) étant pressés avec l'élément de guidage (40) des éléments de cadre latéral des plis (28) contre l'élément de cadre de base (24).

2. Procédé selon la revendication 1, **caractérisé en ce que** les éléments de cadre latéral des bords (26) et l'élément de cadre de base (24) sont reliés les uns aux autres de façon étanche aux fluides.

3. Procédé selon l'une des revendications précédentes, **caractérisé en ce que** les éléments de cadre latéral des bords (26) et les éléments de cadre latéral des plis (28) sont collés ou soudés les uns aux autres de façon étanche aux fluides.

4. Procédé selon l'une des revendications précédentes, **caractérisé en ce que** les éléments de cadre latéral des bords (26) initialement séparés sont reliés de façon étanche aux fluides à l'élément de cadre de base (24) séparé et, le cas échéant, aux éléments de cadre latéral des plis (28) séparés.

5. Procédé selon l'une des revendications 1 à 3, **caractérisé en ce que** les éléments de cadre latéral des bords (26), l'élément de cadre de base (24) et, le cas échéant, les éléments de cadre latéral des plis (28) sont reliés les uns aux autres, de préférence au moyen d'assemblages de flexion, en particulier de charnières à film (30), en un seul bloc et sont exécutés de manière à former le cadre d'élément filtrant (12).

6. Procédé selon l'une des revendications précédentes, **caractérisé en ce que** le soufflet filtrant (14) est relié au cadre d'élément filtrant (12) par collage, notamment au moyen d'une colle (42, 46) peu fluide ou d'un film adhésif qui est activé, en particulier chauffé, devenant ainsi formable, ou bien par soudage, en particulier par soudage en bout à l'aide de réflecteurs ou soudage par infrarouge.

7. Procédé selon l'une des revendications 1 à 5, **caractérisé en ce que** le cadre d'élément filtrant (12) est pourvu de logements, notamment de goulottes (44) ou d'excavations dans lesquelles est introduite de la colle, en particulier de la colle thermofusible (42) ou de la colle peu fluide, et que les zones (22) des plis frontaux (16) qui sont reliées au cadre d'élément filtrant (12) et/ou les bords frontaux du soufflet filtrant (14) sont pressés dans les logements ainsi pourvus de colle (42).

8. Procédé selon l'une des revendications précédentes, **caractérisé en ce que** le soufflet filtrant (14) est relié au cadre d'élément filtrant (12) au moyen d'une colle (46) notamment peu fluide et que, jusqu'à ce que la colle (46) durcisse, le cadre d'élément filtrant (12) pivote avec un mouvement de va-et-vient dans différentes directions dans l'espace.

9. Élément filtrant plat (10) en particulier rectangulaire, pour des fluides, en particulier d'un véhicule automobile, avec un soufflet filtrant (14) réalisé dans un milieu filtrant plié, en particulier dans un milieu filtrant plié en accordéon, l'élément filtrant plat étant produit notamment selon le procédé décrit selon l'une des revendications précédentes, le soufflet filtrant (14) étant relié, dans les zones (22) de ses plis frontaux (16) de façon étanche aux fluides à un cadre d'élément filtrant (12) fixe et les bords frontaux (18) du soufflet filtrant (14) étant reliés de façon étanche aux fluides au cadre d'élément filtrant (12), de telle sorte que le soufflet filtrant (14) est maintenu dans le cadre d'élément filtrant (12), le soufflet filtrant (14) étant relié, dans les zones (22) de ses plis frontaux (16), de façon étanche aux fluides à un élément de cadre de base (24) du cadre d'élément filtrant (12) et les bords frontaux (18) du soufflet filtrant (14) étant reliés de façon étanche aux fluides respectivement à un élément de cadre latéral des bords (26) du cadre d'élément filtrant (12), et respectivement un élément de cadre latéral des plis (28) étant disposé entre les éléments de cadre latéral des bords (26) et relié de façon étanche aux fluides à l'élément de cadre de base (24) et aux éléments de cadre latéral des bords (26), **caractérisé en ce que** le cadre d'élément filtrant (12) présente au moins un élément de cadre latéral des plis (28) qui comprend des éléments de guidage (40) au moyen desquels les plis frontaux (16) peuvent être pressés contre l'élément de cadre de base (24).

10. Élément filtrant plat selon la revendication 9, **caractérisé en ce que** les éléments de cadre latéral des bords (26), l'élément de cadre de base (24) et éventuellement les éléments de cadre latéral des plis (28) sont reliés les uns aux autres, de préférence au moyen d'assemblages de flexion, en particulier de charnières à film (30), en un seul bloc.

11. Élément filtrant plat (10) selon la revendication 9 ou 10, **caractérisé par** un dispositif d'étanchéité (48) qui se prête, lorsque l'élément filtrant plat (10) est disposé dans un boîtier de filtre (52), à séparer de façon étanche aux fluides un côté de fluide pur (54) de l'élément filtrant plat (10) d'un côté de fluide brut (56).

12. Dispositif de filtration pour fluides, notamment d'un véhicule automobile, avec un boîtier de filtre (52) servant à loger un élément filtrant plat (10) selon l'une des revendications 9 à 11.
